# EUROPEAN PATENT SPECIFICATION

(11) **EP 3 036 056 B1**
(45) Date of publication and mention of the grant of the patent: **20.12.2023**
(21) Application number: 14758414.8
(22) Date of filing: 21.08.2014
(51) Int. Cl.: B22F 10/34, B22F 10/73, B22F 12/90, B22F 10/28, B33Y 40/00, B33Y 30/00, B33Y 50/02, B29C 64/153, B29C 64/357, B29C 64/393, B22F 1/052

(54) **APPARATUS AND METHODS FOR BUILDING OBJECTS BY SELECTIVE SOLIDIFICATION OF POWDER MATERIAL**
VORRICHTUNG UND VERFAHREN ZUR KONSTRUKTION VON OBJEKTEN DURCH SELEKTIVE VERFESTIGUNG EINES PULVERMATERIALS
APPAREIL ET PROCÉDÉS POUR CONSTRUIRE DES OBJETS PAR SOLIDIFICATION SÉLECTIVE DE MATIÈRE EN POUDRE

(30) Priority: 22.08.2013 GB 201315036
(43) Date of publication of application: 29.06.2016
(73) Proprietor: Renishaw Plc., Wotton-Under-Edge, Gloucestershire GL12 8JR (GB)
(72) Inventor: MCFARLAND, Geoffrey, Wotton-under-Edge Gloucestershire GL12 8JR (GB); FERRAR, Ben Ian, Stoke-on-Trent Staffordshire ST7 2XY (GB)
(74) Representative: Matthews, Paul
(86) International application number: PCT/GB2014/052572
(87) International publication number: WO 2015/025171

(56) References cited:
- EP-A1- 2 983 895
- WO-A2-2004/005014
- DE-A1-102006 055 326
- JP-A- 2005 335 199
- US-A1- 2001 045 678
- US-A1- 2010 192 806

## Description

### Summary of Invention

This invention concerns apparatus and methods for building objects by selective solidification of powder material. The invention has particular application to controlling the energy required to melt a powder bed.

### Background

Selective solidification methods for producing objects comprise layer-by-layer solidification of a material, such as a metal powder material, using a high energy beam, such as a laser beam or electron beam. A powder layer is deposited on a powder bed in a build chamber and the beam is scanned across portions of the powder layer that correspond to a cross-section of the object being constructed. The beam melts or sinters the powder to form a solidified layer. After selective solidification of a layer, the powder bed is lowered by a thickness of the newly solidified layer and a further layer of powder is spread over the surface and solidified, as required.

Selective solidification apparatus may comprise a recirculation loop for recirculating powder from the build chamber to powder dispensing apparatus that doses powder for forming into a powder layer. It is known that as building of the object progresses in apparatus using a powder recirculation loop, the quality of the build can change.

US2010/0192806 discloses a system wherein unused powder is removed from a laser sintering machine at the end of a build and processed in separate machines/devices before being reused in the laser sintering machine for a subsequent build. The processing includes modifying the powder material, such as removing particles with less than a defined grain size. However, in order to avoid contamination, such as oxidization, of the powder material on transfer of the powder material, it is necessary to maintain an inert atmosphere of sufficient quality in all the devices and the hoses used to transfer the powder. Small powder particles, so called "fines", are particularly sensitive to small differences in the quality of the atmosphere as the relatively large surface area makes such particles highly reactive.

US5527877 discloses laser-sinterable powder which allows the powder to be sintered in a selective laser sintering machine to form a sintered part which is, allegedly, fully dense. At least 80% of the number of the particles are from 11 µm to 53 µm and less than 5% of the particles are greater than 180µm.

JP2005-335199 discloses apparatus comprising a powder recovery circuit having a component analyser, a mixer and a material replenishing unit. When the particle size distribution of the recovered powder is different to the original powder, particles of the required size can be added to the recovered powder. It is preferable to mix materials with a large quantity of fine particles rather than large diameter particles as fine particles tend to be lost through scattering from the collected powdered material. It is preferable that the component analyser measures fineness during sampling, in addition to the material analysis, the measured particle fineness compared to the particle fineness of the original powder to determine the material and quantity to be added.

DE102006055326 A1 discloses, in a rapid prototyping method, mixing excess powder in a certain ratio with new, unused powder.

EP2983895 forms part of the state of the art according to A54(3) EPC and discloses a method for processing excess material powder to be reused, which material powder arises and is collected during the production of three-dimensional objects from material powder having a desired particle size distribution by solidifying said material powder layer by layer.

### Summary of Invention

According to a first aspect of the invention there is provided an additive manufacturing machine for building objects by layerwise melting of powder material, the machine comprising a build chamber containing a build platform, a powder dispenser for depositing the powder material in layers across the build platform, a high energy beam for selectively melting powder material in each layer, a recirculation loop for recirculating powder from the build chamber to the powder dispenser and characterised by and a control device for removing micro build particles from the powder material to control the particle size distribution of the powder material delivered to the powder dispenser, the micro build particles having a particle size below an upper particle size limit specified for the build, and having a particle size less than 10 micrometers and the recirculation loop is in gaseous communication with the build chamber such that the build chamber and the recirculation loop for recirculating powder from the build chamber to the powder dispenser share a common inert gas atmosphere. Controlling a property of the powder material may maintain build quality over a build or successive builds. In particular, even after ensuring that the powder material only (or at least predominately) contains particles below the upper particle size limit (so called build particles), other properties of the remaining powder material may affect build quality. Accordingly, controlling one or more of these properties to be within a desired range may improve the build quality. By having the control device as part of the additive manufacturing machine, the powder material may be transferred to/from the control device in an atmosphere common to that in the build chamber to avoid contamination.

The property of the powder material may by moisture content, the control device arranged for controlling the moisture content of the powder material. For example, the control device may reduce the moisture in the powder material by heating the powder material.

The property of the powder material may be morphology of the build particles, the control device arranged for controlling a distribution of different shaped build particles in the powder material. For example, the morphology of the particles in the powder material may affect packing density and therefore, the morphology may be controlled in order to maintain a specified packing density. The morphology of the particles may affect the reactivity of the particles. For example, the morphology may affect the amount of energy that a particle may absorb and therefore, the amount of energy required to reach a melt temperature of the material. Accordingly, the distribution of different shaped build particles in the powder material may be controlled to reduce the energy required to reach a melt temperature. The control device may comprise a gas classifier (elutriation) device for separating the particles by shape.

The property of the powder material may be chemical composition, the control device arranged for controlling the chemical composition of the build particles in the powder material. Oxidization of build particles can affect the build quality. Therefore, reducing a number of oxidized build particles may improve the build quality.

The property of the powder material may be a particle size distribution of the build particles. Controlling the particle size distribution in the powder material provides control over build quality. Not to be constrained by any one theory, but it is believed that build quality changes in the prior art machine because of changes in the particle size distribution of the powder material. In particular, build particles below the upper particle size limit generated during the SLM process are retained in recirculated powder, changing the particle size distribution of the powder material as the build progresses or in successive builds. Smaller build particles may absorb energy more readily than larger build particles. Furthermore, during formation of the melt pool, the smaller particles may melt first with the resultant melt flowing between unmelted larger particles. Accordingly, changes in the particle size distribution may change characteristics of the melt pool created using the high energy beam and, in turn, affect the quality of the object that is built. For example, an increase in the amount of energy absorbed by the powder material may increase porosity of the solidified material. Changes in the size of the melt pool may affect the accuracy in which an object can be built and/or the integrity of the final object.

The control device is arranged for controlling a particle size distribution of build particles in the powder material during building of an object. In this way, a consistent melt can be maintained throughout the build. In addition or alternatively, the control device may be arranged for controlling a particle size distribution of build particles in the powder material between successive builds.

The control device may control a ratio of particles of a particular size in the powder material, wherein particles of a particular size are particles having a particle size less than one-quarter, and preferably less than one-fifth, and more preferably, less than one-tenth of the upper particle size limit The micro build particles may be particles having a size less than 5 micrometres and, optionally, nanoparticles. Typically, an upper particle size limit for powder material used in selective laser melting devices is around 50 micrometres, although a larger upper particle size limit, such as 100 micrometres, could used for higher laser power devices. It is believed that variations in the ratio of the micro build particles will have the most significant effect on the absorption of energy and therefore, by controlling, such as maintaining within a set range, the ratio of micro build particles in the powder material, a desired build performance may be achieved.

The ratio of micro or macro particles in the powder material may be a ratio by volume, by weight or by number to the total volume, weight or number of particles in the powder material.

The control device may change the particle size distribution by adding micro build particles and/or by adding or removing macro build particles, wherein macro build particles are particles having a size larger than the micro build particles but below the upper particle size limit. The control device may be arranged to remove only a proportion of build particles of a particular size from the powder material. For example, the control device may comprise a build particle filter for removing build particles of the particular size from the powder material and a bypass for allowing a proportion of the build particles of the particular size to bypass the build particle filter and remain in the powder material. The proportion of build particles of a particular size removed from the powder material may be variable, for example by altering the number of build particles that pass through the bypass. The particular size may be a range of particle sizes, such as particles having a size less than 10 micrometres, preferably less than 5 micrometres and, optionally, nanoparticles.

The control device may comprise a cyclone separator or a gas elutriation system for removing a proportion of build particles of a particular size from the powder material.

The control device may comprise a delivery device for delivering additional particles of the material from a source and a mixer for blending the additional particles with the powder material. For example, the additional particles may comprise particles having a particular size distribution, such as a source of macro and/or micro build particles and the mixer is arranged to blend the additional particles in a controlled fashion based on a pre-blended particle size distribution of the powder material recovered from the build chamber. The particles from the source may comprise macro particles coated with micro particles. A batch of just micro particles may have poor flowability because of the small particle size. Accordingly, such a batch of powder material may be difficult to transport and blend with powder material recovered from the build chamber. However, by introducing macro build particles, such as particles above 10 micrometres, the micro particles may coat the macro particles and be carried through the system "piggy-backing" the macro particles. Accordingly, the source of additional particles may comprise a known ratio of macro particles to micro particles. The additional particles may have a ratio by volume of micro particles of less than 32%, preferably less than 10% and even more preferably less than 5%. This may ensure that there are sufficient macro particles to carry the micro particles.

The control device may comprise a sensor for detecting a property of the powder material from which a ratio of micro or macro build particles in the powder material can be determined/inferred, the filter and/or mixer controlled in response to signals from the sensor. For example, the sensor may comprise a video camera for imaging the powder material, a flow meter for measuring a flow of the powder material, a device for measuring density of the powder material, such as a tap density machine, a device for measuring particle size from diffraction or scattering of light, such as a laser beam, from the powder material or a gas classifier, wherein the powder material is injected into a vertically directed gas stream.

Alternatively or additionally, the filter and/or mixer may be controlled based upon predicted changes in the particle size distribution with progress of the build. For example, the changes may be predicted using a computer model of the additive manufacturing process or from using a previous build as a benchmark.

The machine may comprise a recirculation loop for recirculating powder from the build chamber to the powder dispenser. The control device may be arranged to control the particle size distribution of powder material delivered from the recirculation loop to the powder dispenser. For example, a sensor of the control device may detect a property of the powder material in the recirculation loop and a device, such as a build particle filter and/or mixer, for altering the particle size distribution may remove a proportion or add build particles of a particular size to the powder material in the recirculating loop to alter the particle size distribution of powder material delivered from the recirculation loop to the powder dispenser.

The machine may comprise a threshold filter, such as a sieve, for removing from the powder material particles having a size above the upper particle size limit. During the build process, particles above the upper particle size limit may be formed and it is desirable to remove these particles from the powder material before the powder material is reused. Accordingly, the threshold filter may be provided in the recirculating loop to remove particles having a size above the upper particle size limit from powder in the recirculating loop.

Particle size may be defined in terms of particles that pass through a sieve having a particular mesh size. Such a definition may be appropriate when the build powder filter and/or threshold filter are sieves.

Particle size may be defined in terms of a weight based particle size. Such a definition may be appropriate when the build powder filter and/or threshold filter is a cyclone filter, wherein particles are filtered by mass.

According to a second aspect of the invention there is provided a method of building an object by layerwise melting of powder material, the method comprising depositing powder material in layers across a build platform in a build chamber, selectively melting with a high energy beam powder material in each layer and characterised by controlling, during the build, a particle size distribution of build particles in the powder material delivered from a recirculation loop to a powder dispenser by removing micro build particles having a particle size below an upper particle size limit specified for the build and the recirculation loop is in gaseous communication with the build chamber such that the build chamber and the recirculation loop share a common inert gas atmosphere.

The property may be a property given to the powder material by build particles in the powder material that are below an upper particle size limit specified for the build.

Sensing a property of the build powder may allow a user to verify that the build is proceeding with the required quality powder. If the sensor detects that a property of the powder is outside an acceptable range, the powder may be changed and/or the additive manufacturing machine inspected to determine the cause for the powder material falling outside specification.

The property of the powder material may by moisture content. The sensor may comprise a thermo gravimetric analyser.

The property of the powder material may be morphology. The sensor may be a video camera and processor for automatically analysing images of the powder captured by the video camera to identify shapes of particles of the particle material. Alternatively or additionally, the sensor may comprise a gas classifier, wherein the powder material is injected into a vertically directed gas stream.

The property of the powder material may be chemical composition. The sensor may comprise a spectrometer.

The property of the powder material may be a particle size distribution of the build particles. The sensor may comprise a video camera for imaging the powder material and a processor for automatically determining a particle size from images of the powder material captured by the camera, a flow meter for measuring a flow of the powder material, a device for measuring density of the powder material, such as a tap density machine, a device for measuring particle size from diffraction or scattering of light, such as a laser beam, or microwaves from the powder material or a gas classifier, wherein the powder material is injected into a vertically directed gas stream.

The machine may comprise a recirculation loop for recirculating powder from the build chamber to the powder dispenser. The sensor may be arranged to detect a property of powder material delivered from the recirculation loop to the powder dispenser.

The machine may comprise multiple sensors located at different locations along a powder material path in the machine such that changes in the property of the powder material between different locations along the path can be identified. For example, sensors may be located both before and after a filter to determine whether the filter is operating satisfactorily.

According to an eighth aspect of the invention there is provided a method of building an object by layerwise melting of powder material, the method comprising depositing powder material in layers across a build platform in a build chamber, selectively melting with a high energy beam powder material in each layer and detecting, during the build, a property of the powder material.

The property may be a property given to the powder material by build particles in the powder material that are below an upper particle size limit specified for the build.

According to a ninth aspect of the invention there is provided a data carrier having instructions stored thereon, the instructions, when executed by a processor, cause the processor to carry out the method of the eighth aspect of the invention.

The data carrier of the above aspects of the invention may be a suitable medium for providing a machine with instructions such as non-transient data carrier, for example a floppy disk, a CD ROM, a DVD ROM / RAM (including - R/-RW and +R/ + RW), an HD DVD, a Blu Ray(TM) disc, a memory (such as a Memory Stick(TM), an SD card, a compact flash card, or the like), a disc drive (such as a hard disc drive), a tape, any magneto/optical storage, or a transient data carrier, such as a signal on a wire or fibre optic or a wireless signal, for example a signals sent over a wired or wireless network (such as an Internet download, an FTP transfer, or the like).

### Description of the Drawings

**Figure 1** shows schematically an additive manufacturing machine according to one embodiment of the invention;
**Figure 2** shows schematically an additive manufacturing machine according to another embodiment of the invention;
**Figure 3** shows schematically an additive manufacturing machine and filtering apparatus according to a further embodiment of the invention; and
**Figure 4** is a curve of particle-size distribution characteristic of a particle-size distribution for powder material that may be used in the additive manufacturing machines shown in Figures 1 to 3.

### Description of Embodiments

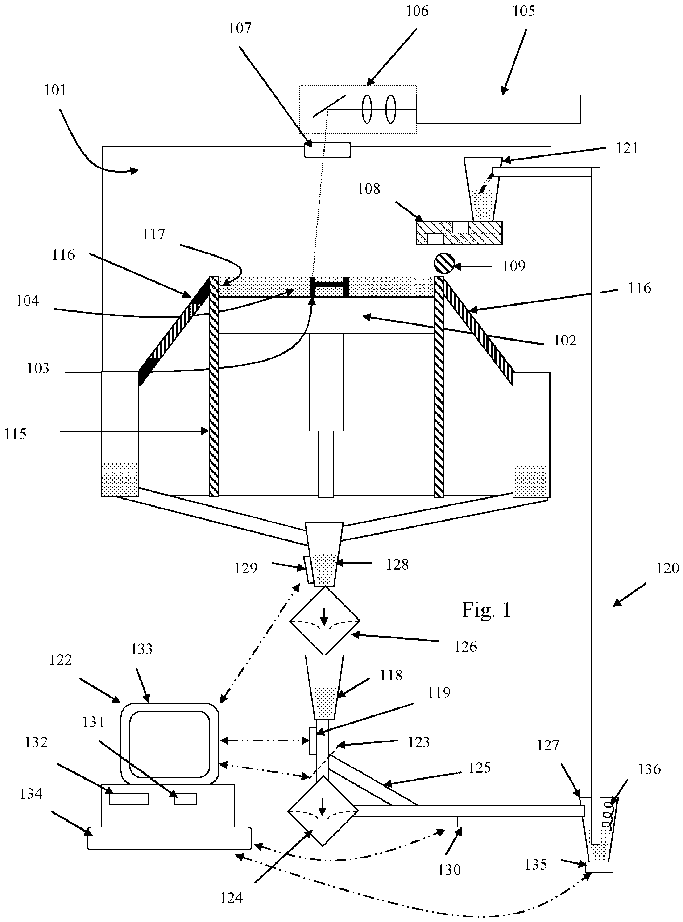

Referring to Figure 1, a laser solidification machine according to an embodiment of the invention comprises a main chamber 101 having therein partitions 115 that define a build chamber 117. A build platform 102 is provided for supporting an object 103 built by selective laser melting powder material 104. The platform 102 can be lowered within the build chamber 117 as successive layers of the object 103 are formed. A build volume available is defined by the extent to which the build platform 102 can be lowered into the build chamber 117. The main chamber 101 provides a sealed environment such that an inert atmosphere can be maintained in main chamber 101 during building of an object. A pump (not shown) and source of inert gas (not shown) may be provided for creating the inert atmosphere in chamber 101.

A powder dispenser for forming layers of powder 104 as the object 103 is built comprises a dosing apparatus 108 for dosing of powder material from storage hopper 121, and a wiper 109 for spreading dosed powder across the working area. For example, the dosing apparatus 109 may be apparatus as described in WO2010/007396. A laser module 105 generates a laser for melting the powder 104, the laser directed and focussed as required by optical module 106 under the control of a computer 122. The laser enters the chamber 101 via a window 107.

A recirculation loop 120 is provided for recirculating powder material that is not used to build the object back to the storage hopper 121. The reciculation loop 120 is in gaseous communication with the build chamber 101 such that the build chamber 101 and recirculation loop 120 share a common inert gas atmosphere. At either end of the build chamber 117 in a direction that the wiper 109 moves are chutes 116 for collecting powder material that is wiped from the working area. The chutes 116 channel the powder into a collection hopper 128. Associated with the collection hopper 128 is a sensor 129 for measuring a property of the collected powder material. For example, the sensor 129 may be a spectrometer for measuring chemical properties of the powder material. Signals from the sensor 129 are sent to the computer 122 (indicated by the dashed and double dotted line) and, if the level of oxidization of the powder material is deemed to be too high, the computer will generate an alert to inform the user. The user can then investigate to determine the cause of the increase in oxygen levels, such as a failed seal.

Powder for collection hopper 128 is fed into threshold filter 126, which filters out particles having a size above the upper particle size limit specified for the build. Typically, the upper size limit will be between 50 and 100 micrometres. The threshold filter 126 may be a sieve having an appropriate mesh size.

The powder material filtered by threshold filter 126 is output into an intermediate hopper 118. A sensor 119 is provided on the output from the intermediate hopper 118 to detect a ratio of micro build particles, in this embodiment, particles less than 10 micrometres, in the powder material dispensed from intermediate hopper 118. Signals from the sensor 119 are sent to computer 122 (indicated by the dashed and double dotted line). For example, sensor 119 may be a device for determining particle size from diffraction or scattering of a laser beam.

The powder material output from the intermediate hopper 118 is directed towards a micro build particle filter 124 or a bypass line 125 for bypassing the filter 124 by a movable baffle 123. The baffle 123 is movable to vary the proportions of powder material that flows into the filter 125 and bypass line 125 and is controlled by computer 122.

The powder material from filter 124 and bypass line 125 collects in a further hopper 127. An additional particle-size sensor 130 is provided on the line to the hopper 127 in order to provide verification that the desired particle-size distribution has been achieved. Signals from the sensor 130 are sent to the computer 122 (indicated by the dashed and double dotted line).

Associated with hopper 127 is a sensor 135 for weighing the powder material in hopper 127 and a heater 136. The powder material in hopper 127 may be heated with heater 136 and changes in the weight of the powder material recorded using sensor 135. From such changes in weight, moisture content of the powder material can be inferred. The computer 122 may be arranged to receive signals from sensor 135 and generate an alert if the moisture content falls outside predetermined thresholds. From hopper 127 the powder material is transported, for example by mechanical means, to storage hopper 121.

Computer 122 comprises a processor unit 131, memory 132, display 133, user input device 134, such as a keyboard, touch screen, etc, a data connection to modules of the laser melting unit, such as motors (not shown) for lowering the platform, the optical module 106, laser module 105, the dosing unit 108, wiper 109, sensors 119, 129, 130 and 135 and movable baffle 123. The modules are controlled by the computer in accordance with instructions of a computer program stored on memory 132.

An object defined in an appropriate file format, such as a .MTT file format, is imported into the computer program stored on computer 122. In use, an object is built in accordance with the object definition in the file by appropriate control of the modules of the laser unit such that the object is built in a layerwise process by selectively melting successive layers of powder material with the laser beam.

During the build, excess powder is pushed into the chutes 116 by the wiper 109 and gravity fed to collection hopper 128. In collection hopper 128, a chemical composition of the powder material is analysed using sensor 129 to determine if the conditions within the build chamber 101 are acceptable. The powder from collection hopper 128 is passed to threshold filter 126, which removes conglomerates, formed during the melting process, from the collected powder material. The filtered powder material collects in intermediate hopper 118.

Powder output by the intermediate hopper 118 falls past sensor 119, which detects the ratio of micro particles in the flow. In response to the signals generated from the sensor 119, the computer controls baffle 123 to control the proportions of the flow of powder material that pass through the bypass line 125 and the filter 124 to provide a required ratio of micro particles in the hopper 127. If an amount of generated micro particles is above a desired level, a proportion of the flow is directed through filter 124. This proportion is varied as the number of micro particles in the flow changes. By controlling the flow in this manner the particle-size distribution of powder material recirculated to the hopper 121 is controlled/adjusted.

The computer 122 may also use the signals from sensor 119 to determine if the threshold filter 126 is performing as required. For example, if sensor 119 is sensing a significant proportion of particles above the upper particle size limit then this indicates that threshold filter has failed, for example a hole has been formed therein, requiring replacement of the filter 126. If the computer 122 determines that a proportion of particles above the upper particle size limit is above a preset threshold, an alert may be generated, for example on display 133

The desired particle-size distribution may be a distribution that reduces the amount of energy required to reach a melt temperature of the powder material balanced against flowability of the powder and increased losses of powder material containing a higher ratio of smaller particles through seals in the machine.

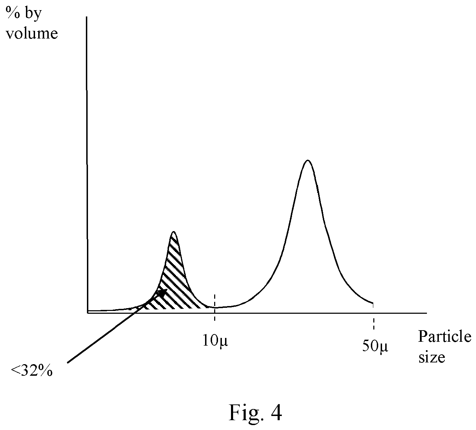

The desired energy input in order to achieve a melt temperature, and therefore a desired ratio of micro build particles to total build particles, will vary depending upon a number of factors, such as material being melted, laser power, spot size, hatch distance, scan speed and the like. The computer may be programmed to control the baffle 123 to achieve a consistent ratio of micro particles in the powder material. To achieve this, the initial supply of powder material may comprise a desired ratio of micro particles. Typically, the proportion by volume of micro particles will be less than 32% and, more typically, will be between 0.1 and 10%, and even more typically, between 0.1 and 5%. Figure 4 shows a typical curve for the particle-size distribution, wherein two peaks are present, one for the micro build particles and one for the macro build particles.

At the end of the build, powder material contained in the powder bed 104 may be pushed into chutes 116 by raising the build platform 102. This powder material is filtered and recirculated to hopper 121 for the next build.

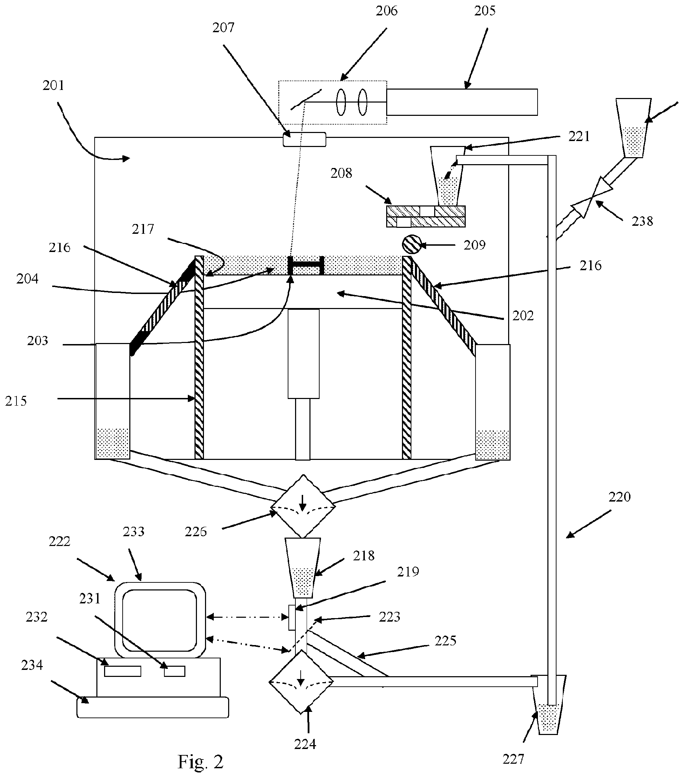

Referring to Figure 2, an alternative embodiment of the machine is shown. In this embodiment, features that are similar or the same as features of the embodiment described with reference to Figure 1 have been given like reference numerals but in the series 200.

In this embodiment, an additional hopper 237 is provided that contains micro build particles. A valve 238 controls the flow of the micro build particles from the hopper 237, the particles delivered from hopper 237 being mixed with the powder material transported from hopper 227. The valve 238 is controlled by computer 222. This source of micro particles allows micro particles to be added to the powder material if there are insufficient amounts of micro particles in the transported material. Micro particles may become trapped on surfaces of the machine and therefore, even if micro particles are being generated by the melting process, these particles may fail to be recirculated to hopper 221. Accordingly, additional hopper 237 provides a source of micro particles for replenishing the micro particles, if required.

The hopper 237 may comprise carrier particles coated with the micro particles for transporting the micro particles through the valve 238 to mix with the recirculating powder. Fine particles of less than 10 micrometres tend to have poor flowability. By providing carrier particles, flow of the micro particles may be facilitated. The carrier particles may be macro build particles.

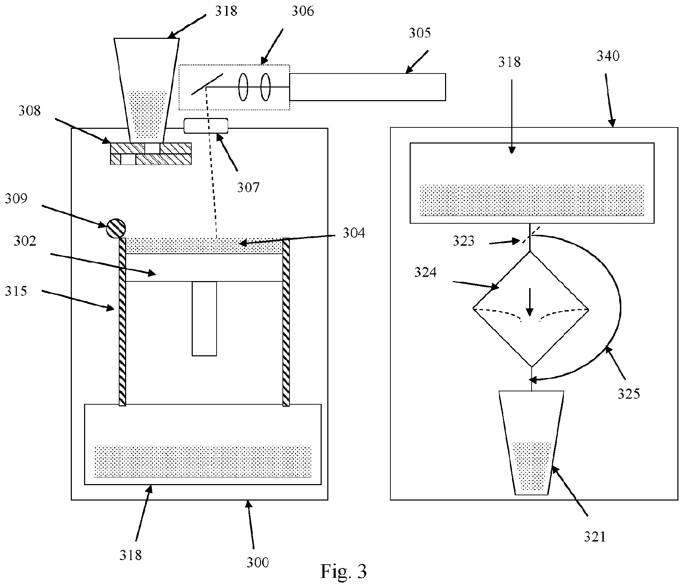

Referring to Figure 3, a further embodiment of the machine is shown. In this embodiment, features that are similar or the same as features of the embodiments described with reference to Figures 1 and 2 have been given like reference numerals but in the series 300.

In Figure 3 powder material is collected in a hopper 318 during the build process. At the end of the build process, the hopper 318 is removed from the additive manufacturing machine 300 and transferred to a separate filtering apparatus 340. In filtering apparatus 340, the powder material is gravity fed through one or more filters into a hopper 321. The one or more filters include a filter 324 that filters micro build particles from the powder material gravity fed from hopper 318. A bypass loop 325 extends around the micro build particle filter 324 and a movable baffle 323 controls the proportion of powder material that is fed from hopper 318 through the micro build particle filter 324. The movable baffle 324 is controlled by a computer (not shown) to direct a required proportion of the flow through the micro build particle filter based upon a ratio of micro particles in the powder material contained in hopper 318. The ratio of micro particles in hopper 318 may be determined by taking a sample of the powder and passing the sample through an analysis device. The one or more filters may also include a threshold filter for removing conglomerates that are above an upper particle size limit specified for the build. Alternatively, the threshold filter may be provided in the additive manufacturing machine 300 in order to filter the powder material of large conglomerates before the powder material reaches hopper 318 (in a similar manner to that shown in Figures 1 and 2).

The filtered powder material collects in hopper 321, the hopper 321 removable from the filtering apparatus 340 and locatable in the additive manufacturing machine 300 to supply powder material to the dosing mechanism 308. A plurality of hoppers 318, 321 may be provided such that the machine 300 can carry out a build using one set of hoppers 318, 321, whilst filtering is carried out by apparatus 340 on another set of hoppers 318, 321.

It will be understood that alterations and modifications can be made to the above described embodiments without departing from the scope of the invention as defined in the claims. For example, in addition to filtering or instead of adding micro particles from/to the powder material, macro build particles having a size greater than 10 micrometres but less than the upper particle size limit specified for the build may be filtered and/or added to the powder material to achieve the desired particle size distribution.

## Claims

1. An additive manufacturing machine for building objects by layerwise melting of powder material, the machine comprising a build chamber (101, 201) containing a build platform (102, 202), a powder dispenser (108, 121, 208, 221) for depositing the powder material in layers across the build platform (102, 202), a high energy beam for selectively melting powder material in each layer, a recirculation loop (120, 220) for recirculating powder from the build chamber (101, 201) to the powder dispenser (108, 121, 208, 221) and **characterised by** a control device (119, 122, 123, 124, 125, 130; 219, 222, 223, 224, 225, 230, 237, 238) for removing micro build particles from the powder material to control a particle size distribution of powder material delivered to the powder dispenser (108, 121, 208, 221), the micro build particles having a size below an upper particle size limit specified for the build and having a particle size less than 10 micrometers, and the recirculation loop (120, 220) is in gaseous communication with the build chamber (101, 201) such that the build chamber (101, 201) and the recirculation loop (120, 220) share a common inert gas atmosphere.

2. An additive manufacturing machine according to claim 1, wherein the micro build particles are particles having a size less than 5 micrometres or are nanoparticles.

3. An additive manufacturing machine according to claim 1 or claim 2, wherein the control device (119, 122, 123, 124, 125, 130; 219, 222, 223, 224, 225, 230, 237, 238) is arranged to change the ratio of the build particles that are micro build particles by adding micro build particles and/or, wherein the control device is arranged to change a ratio of micro build particles by adding or removing macro build particles, wherein macro build particles are particles having a size larger than the micro build particles but below the upper particle size limit.

4. An additive manufacturing machine according to any one of claims 1 to 3, wherein the control device (119, 122, 123, 124, 125, 130; 219, 222, 223, 224, 225, 230) is arranged to remove only a proportion of build particles of a particular size and, wherein the proportion of build particles of a particular size removed from the powder material may be variable.

5. An additive manufacturing machine according to claim 4 wherein the control device may comprise a build particle filter (124) for removing build particles of the particular size from the powder material and a bypass (125) for allowing a proportion of the build particles of the particular size to bypass the build particle filter (124) and remain in the powder material.

6. An additive manufacturing machine as claimed in claim 5 wherein the control device may be arranged to alter the proportion of build particles that pass through the bypass.

7. An additive manufacturing machine according to any one of claims 1 to 6 wherein the control device comprises a cyclone separator or a gas elutriation system for removing a proportion of build particles of the particular size from the powder material.

8. An additive manufacturing machine according to any preceding claim, wherein the control device comprises a delivery device (238) for delivering particles of the material from a source (237) and a mixer for controlling the addition of the particles from the source to the powder material.

9. An additive manufacturing machine according to claim 5, wherein the control device comprises a sensor (119, 219, 130) for detecting a property of the powder material from which a ratio of micro build particles in the powder material can be determined, the filter (124) and/or mixer controlled in response to signals from the sensor (119, 219, 130).

10. An additive manufacturing machine according to any one of claims 1 to 9, wherein the control device (119, 122, 123, 124, 125, 130; 219, 222, 223, 224, 225, 230) is arranged to control a particle size distribution of powder material delivered from the recirculation loop (120, 220) to the powder dispenser (108, 121, 208, 221) and optionally wherein a sensor (119, 130, 219) of the control device is configured to detect a property of the powder material in the recirculation loop (120, 220) and optionally a device for altering the particle size distribution removes a proportion or adds build particles of a particular size to the powder material in the recirculating loop (120, 220) to alter the particle size distribution of powder material delivered from the recirculation loop (120, 220) to the powder dispenser (108, 121, 208, 221).

11. An additive manufacturing machine according to any one of the preceding claims, wherein the control device (119, 122, 123, 124, 125, 130; 219, 222, 223, 224, 225, 230) is arranged for controlling the property of the powder during building of the object or between successive builds.

12. A method of building an object by layerwise melting of powder material, the method comprising depositing powder material into a build chamber (101, 201), spreading the deposited powder material in a layer across a build platform (102, 202), selectively melting with a high energy beam powder material in each layer and **characterised by** controlling, during the build, a particle size distribution of build particles in the powder material delivered from a recirculation loop (120, 220) to a powder dispenser (108, 121, 208, 221) by removing micro build particles having a size below an upper particle size limit specified for the build, and having a particle size of less than 10 micrometers, wherein the recirculation loop (120, 220) is in gaseous communication with the build chamber (101, 201) such that the build chamber (101, 201) and the recirculation loop (120, 220) share a common inert gas atmosphere.

13. A method according to claim 9, wherein controlling, during the build, a particle size distribution of build particles in the powder material comprises adding or removing particles to/from the powder material during the build.

14. A method according to claim 9 or claim 10, wherein the micro build particles are particles having a size less than 5 micrometres or nanoparticles.

## Patentansprüche

1. Maschine zur additiven Fertigung von Objekten durch schichtweises Schmelzen von Pulvermaterial, wobei die Maschine eine Aufbaukammer (101, 201), die eine Aufbauplattform (102, 202) enthält, eine Pulverabgabeeinrichtung (108, 121, 208, 221) zum Auftragen des Pulvermaterials in Schichten über die Aufbauplattform (102, 202), einen Hochenergiestrahl zum selektiven Schmelzen von Pulvermaterial in jeder Schicht, eine Rezirkulationsschleife (120, 220) zum Rezirkulieren von Pulver aus der Aufbaukammer (101, 201) zur Pulverabgabeeinrichtung (108, 121, 208, 221) umfasst und **gekennzeichnet ist durch** eine Steuervorrichtung (119, 122, 123, 124, 125, 130; 219, 222, 223, 224, 225, 230, 237, 238) zum Entfernen von Mikroaufbaupartikeln aus dem Pulvermaterial, um eine Partikelgrößenverteilung des Pulvermaterials zu steuern, das der Pulverabgabeeinrichtung (108, 121, 208, 221) zugeführt wird, wobei die Mikroaufbaupartikel eine Größe unterhalb einer oberen Partikelgrößengrenze haben, die für den Aufbau spezifiziert ist, und eine Partikelgröße von weniger als 10 Mikrometern haben, und die Rezirkulationsschleife (120, 220) in Gaskommunikation mit der Aufbaukammer (101, 201) steht, so dass die Aufbaukammer (101, 201) und die Rezirkulationsschleife (120, 220) eine gemeinsame Inertgasatmosphäre teilen.

2. Maschine zur additiven Fertigung nach Anspruch 1, wobei die Mikroaufbaupartikel Partikel mit einer Größe von weniger als 5 Mikrometern oder Nanopartikel sind.

3. Maschine zur additiven Fertigung nach einem der Ansprüche 1 oder 2, wobei die Steuervorrichtung (119, 122, 123, 124, 125, 130; 219, 222, 223, 224, 225, 230, 237, 238) so eingerichtet ist, dass sie das Verhältnis der Aufbaupartikel, bei denen es sich um Mikroaufbaupartikel handelt, durch Hinzufügen von Mikroaufbaupartikeln ändert und/oder wobei die Steuervorrichtung so eingerichtet ist, dass sie ein Verhältnis von Mikroaufbaupartikeln durch Hinzufügen oder Entfernen von Makroaufbaupartikeln ändert, wobei es sich bei Makroaufbaupartikeln um Partikel handelt, die eine Größe aufweisen, die größer ist als die Mikroaufbaupartikel, aber unterhalb der oberen Partikelgrößengrenze liegt.

4. Maschine zur additiven Fertigung nach einem der Ansprüche 1 bis 3, wobei die Steuervorrichtung (119, 122, 123, 124, 125, 130; 219, 222, 223, 224, 225, 230) so angeordnet ist, dass sie nur einen Anteil der Aufbaupartikel einer bestimmten Größe entfernt, und wobei der Anteil der Aufbaupartikel einer bestimmten Größe, die aus dem Pulvermaterial entfernt werden, variabel sein kann.

5. Maschine zur additiven Fertigung nach Anspruch 4, wobei die Steuervorrichtung einen Aufbaupartikel-Filter (124) zum Entfernen von Aufbaupartikeln der bestimmten Größe aus dem Pulvermaterial und einen Bypass (125) umfassen kann, der es einem Anteil der Aufbaupartikel der bestimmten Größe ermöglicht, den Aufbaupartikel-Filter (124) zu umgehen und im Pulvermaterial zu verbleiben.

6. Maschine zur additiven Fertigung nach Anspruch 5, wobei die Steuervorrichtung so eingerichtet sein kann, dass sie den Anteil der Aufbaupartikel, die den Bypass durchlaufen, verändert.

7. Maschine zur additiven Fertigung nach einem der Ansprüche 1 bis 6, wobei die Steuervorrichtung einen Zyklonabscheider oder ein Gasauswaschsystem zum Entfernen eines Anteils von Aufbaupartikeln der bestimmten Größe aus dem Pulvermaterial umfasst.

8. Maschine zur additiven Fertigung nach einem der vorhergehenden Ansprüche, wobei die Steuervorrichtung eine Zuführungsvorrichtung (238) zum Zuführen von Partikeln des Materials von einer Quelle (237) und einen Mischer zum Steuern der Zugabe der Partikel von der Quelle zu dem Pulvermaterial umfasst.

9. Maschine zur additiven Fertigung nach Anspruch 5, wobei die Steuervorrichtung einen Sensor (119, 219, 130) zum Erfassen einer Eigenschaft des Pulvermaterials umfasst, aus der ein Verhältnis von Mikroaufbaupartikeln in dem Pulvermaterial bestimmt werden kann, wobei der Filter (124) und/oder der Mischer in Reaktion auf Signale von dem Sensor (119, 219, 130) gesteuert werden.

10. Maschine zur additiven Fertigung nach einem der Ansprüche 1 bis 9, wobei die Steuervorrichtung (119, 122, 123, 124, 125, 130; 219, 222, 223, 224, 225, 230) so angeordnet ist, dass sie eine Partikelgrößenverteilung von Pulvermaterial steuert, das von der Rezirkulationsschleife (120, 220) an die Pulverabgabeeinrichtung (108, 121, 208, 221) geliefert wird, und wobei optional ein Sensor (119, 130, 219) der Steuervorrichtung so konfiguriert ist, dass er eine Eigenschaft des Pulvermaterials in der Rezirkulationsschleife (120, 220) erfasst, und optional eine Vorrichtung zum Ändern der Partikelgrößenverteilung einen Anteil entfernt oder dem Pulvermaterial in der Rezirkulationsschleife (120, 220) Aufbaupartikel einer bestimmten Größe hinzufügt, um die Partikelgrößenverteilung von Pulvermaterial zu ändern, das von der Rezirkulationsschleife (120, 220) an die Pulverabgabeeinrichtung (108, 121, 208, 221) geliefert wird.

11. Maschine zur additiven Fertigung nach einem der vorhergehenden Ansprüche, wobei die Steuervorrichtung (119, 122, 123, 124, 125, 130; 219, 222, 223, 224, 225, 230) so angeordnet ist, dass sie die Eigenschaft des Pulvers während des Aufbaus des Objekts oder zwischen aufeinanderfolgenden Aufbauten steuert.

12. Verfahren zum Aufbauen eines Objekts durch schichtweises Schmelzen von Pulvermaterial, wobei das Verfahren umfasst: Ablagern von Pulvermaterial in einer Baukammer (101, 201), Verteilen des abgelagerten Pulvermaterials in einer Schicht über eine Bauplattform (102, 202), selektives Schmelzen von Pulvermaterial in jeder Schicht mit einem Hochenergiestrahl und **dadurch gekennzeichnet, dass** während des Aufbaus eine Partikelgrößenverteilung von Aufbaupartikeln in dem Pulvermaterial, das von einer Rezirkulationsschleife (120, 220) zu einer Pulverabgabeeinrichtung (108, 121, 208, 221) geliefert wird, gesteuert wird, indem Mikroaufbaupartikel mit einer Größe unterhalb einer oberen Partikelgrößengrenze, die für den Aufbau spezifiziert ist, und mit einer Partikelgröße von weniger als 10 Mikrometern entfernt werden, wobei die Rezirkulationsschleife (120, 220) in Gaskommunikation mit der Aufbaukammer (101, 201) steht, so dass die Aufbaukammer (101, 201) und die Rezirkulationsschleife (120, 220) eine gemeinsame Inertgasatmosphäre teilen.

13. Verfahren nach Anspruch 9, wobei die Steuerung einer Partikelgrößenverteilung von Aufbaupartikeln in dem Pulvermaterial während des Aufbaus das Hinzufügen oder Entfernen von Partikeln zu/aus dem Pulvermaterial während des Aufbaus umfasst.

14. Verfahren nach Anspruch 9 oder 10, wobei die Mikroaufbaupartikel Partikel mit einer Größe von weniger als 5 Mikrometern oder Nanopartikel sind.

## Revendications

1. Machine de fabrication additive pour la fabrication d'objets par fusion couche par couche d'un matériau en poudre, la machine comprenant une chambre de fabrication (101, 201) contenant une plateforme de fabrication (102, 202), un distributeur de poudre (108, 121, 208, 221) pour déposer le matériau en poudre en couches à travers la plateforme de fabrication (102, 202), un faisceau à haute énergie pour faire fondre sélectivement du matériau en poudre dans chaque couche, une boucle de recirculation (120, 220) pour recirculer la poudre depuis la chambre de fabrication (101, 201) vers le distributeur de poudre (108, 121, 208, 221) et **caractérisée par** un dispositif de commande (119, 122, 123, 124, 125, 130 ; 219, 222, 223, 224, 225, 230, 237, 238) pour éliminer des microparticules de fabrication du matériau en poudre pour contrôler une distribution de tailles de particules du matériau en poudre délivré au distributeur de poudre (108, 121, 208, 221), les microparticules de fabrication ayant une taille inférieure à une limite supérieure de taille de particule spécifiée pour la fabrication et ayant une taille de particule inférieure à 10 micromètres, et la boucle de recirculation (120, 220) est en communication gazeuse avec la chambre de fabrication (101, 201) de telle sorte que la chambre de fabrication (101, 201) et la boucle de recirculation (120, 220) partagent une atmosphère de gaz inerte commune.

2. Machine de fabrication additive selon la revendication 1, dans laquelle les microparticules de fabrication sont des particules présentant une taille inférieure à 5 micromètres ou sont des nanoparticules.

3. Machine de fabrication additive selon la revendication 1 ou la revendication 2, dans laquelle le dispositif de commande (119, 122, 123, 124, 125, 130 ; 219, 222, 223, 224, 225, 230, 237, 238) est agencé pour changer le ratio des particules de fabrication qui sont des microparticules de fabrication en ajoutant des microparticules de fabrication, dans laquelle le dispositif de commande est agencé pour changer un ratio de microparticules de fabrication en ajoutant ou en éliminant des macro-particules de fabrication, dans laquelle des macro-particules de fabrication sont des particules ayant une taille plus grande que les microparticules de fabrication mais inférieure à la limite supérieure de taille de particule.

4. Machine de fabrication additive selon l'une quelconque des revendications 1 à 3, dans laquelle le dispositif de commande (119, 122, 123, 124, 125, 130 ; 219, 222, 223, 224, 225, 230) est agencé pour éliminer seulement une proportion de particules de fabrication de taille particulière, et dans laquelle la proportion de particules de fabrication de taille particulière éliminée du matériau en poudre peut être variable.

5. Machine de fabrication additive selon la revendication 4, dans laquelle le dispositif de commande peut comprendre un filtre à particules de fabrication (124) pour éliminer des particules de fabrication de la taille particulière du matériau en poudre et une dérivation (125) pour permettre à une proportion des particules de fabrication de la taille particulière de contourner le filtre à particules de fabrication (124) et rester dans le matériau en poudre.

6. Machine de fabrication additive selon la revendication 5, dans laquelle le dispositif de commande peut être agencé pour modifier la proportion de particules de fabrication qui passent par la dérivation.

7. Machine de fabrication additive selon l'une quelconque des revendications 1 à 6, dans laquelle le dispositif de commande comprend un séparateur à cyclone ou un système d'élutriation de gaz pour éliminer une proportion de particules de fabrication de la taille particulière du matériau en poudre.

8. Machine de fabrication additive selon l'une quelconque des revendications précédentes, dans laquelle le dispositif de commande comprend un dispositif de distribution (238) pour distribuer des particules du matériau en provenance d'une source (237) et un mélangeur pour contrôler l'ajout des particules en provenance de la source au matériau en poudre.

9. Machine de fabrication additive selon la revendication 5, dans laquelle le dispositif de commande comprend un capteur (119, 219, 130) pour détecter une propriété du matériau en poudre à partir de laquelle un ratio de microparticules de fabrication dans le matériau en poudre peut être déterminé, le filtre (124) et/ou le mélangeur étant commandés en réponse à des signaux provenant du capteur (119, 219, 130).

10. Machine de fabrication additive selon l'une quelconque des revendications 1 à 9, dans laquelle le dispositif de commande (119, 122, 123, 124, 125, 130 ; 219, 222, 223, 224, 225, 230) est agencé pour contrôler une distribution de tailles de particule du matériau en poudre délivré de la boucle de recirculation (120, 220) au distributeur de poudre (108, 121, 208, 221), et optionnellement, dans laquelle un capteur (119, 130, 219) du dispositif de commande est configuré pour détecter une propriété du matériau en poudre dans la boucle de recirculation (120, 220), et optionnellement un dispositif de modification de la distribution de tailles de particule élimine une proportion ou ajoute des particules de fabrication de taille particulière au matériau en poudre dans la boucle de recirculation (120, 220) pour modifier la distribution de tailles de particule du matériau en poudre délivré à partir de la boucle de recirculation (120, 220) au distributeur de poudre (108, 121, 208, 221).

11. Machine de fabrication additive selon l'une quelconque des revendications précédentes, dans laquelle le dispositif de commande (119, 122, 123, 124, 125, 130, 219, 222, 223, 224, 225, 230) est agencé pour contrôler la propriété de la poudre pendant la fabrication de l'objet ou entre des fabrications successives.

12. Procédé de fabrication d'un objet par fusion couche par couche d'un matériau en poudre, le procédé comprenant le dépôt d'un matériau en poudre dans une chambre de fabrication (101, 201), l'étalement du matériau en poudre déposé dans une couche sur une plateforme de fabrication (102, 202), la fusion sélective à faisceau de haute énergie avec un matériau en poudre dans chaque couche et **caractérisé par** le contrôle, pendant la fabrication, d'une distribution de tailles de particule de particules de fabrication dans le matériau en poudre délivré à partir d'une boucle de recirculation (120, 220) à un distributeur de poudre (108, 121, 208, 221) en éliminant des microparticules de fabrication ayant une taille inférieure à une limite supérieure de taille de particule spécifiée pour la fabrication, et ayant une taille de particule inférieure à 10 micromètres, dans lequel la boucle de recirculation (120, 220) est en communication gazeuse avec la chambre de fabrication (101, 201) de telle sorte que la chambre de fabrication (101, 201) et la boucle de recirculation (120, 220) partagent une atmosphère de gaz inerte commune.

13. Procédé selon la revendication 9, dans lequel le contrôle, pendant la fabrication, d'une distribution de tailles de particule des particules de fabrication dans le matériau en poudre comprend l'ajout ou l'élimination de particules au/du matériau en poudre pendant la fabrication.

14. Procédé selon la revendication 9 ou la revendication 10, dans lequel les microparticules de fabrication sont des particules ayant une taille inférieure à 5 micromètres ou des nanoparticules.
